(19) Europäisches Patentamt
European Patent Office
Office européen des brevets

(11) **EP 2 664 805 A2**

(12) **EUROPÄISCHE PATENTANMELDUNG**

(43) Veröffentlichungstag:
**20.11.2013 Patentblatt 2013/47**

(51) Int Cl.:
***F15B 20/00*** *(2006.01)*

(21) Anmeldenummer: **13002059.7**

(22) Anmeldetag: **03.05.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **15.05.2012 DE 102012009732**

(71) Anmelder: **ROBERT BOSCH GMBH
70442 Stuttgart (DE)**

(72) Erfinder:
• **Tauber, Richard
63869 Heigenbruecken (DE)**
• **Fröhlich, Udo
97851 Rothefels (DE)**

(74) Vertreter: **Wiesmann, Stephan
Bosch Rexroth AG
DC/IPR
Zum Eisengießer 1
97816 Lohr am Main (DE)**

(54) **Schaltarmaturanordnung**

(57) Offenbart ist eine Schaltarmaturanordnung mit zwei Schaltarmaturen (18, 20), die jeweils von einem Schaltantrieb betätigt werden. Ein Schaltantrieb ist mit einem zusätzlichen Energiespeicher, beispielsweise einer Teilhubfeder (42) ausgeführt, der eine Teilhubprüfung (h) ermöglicht.

Fig. 1

EP 2 664 805 A2

**Beschreibung**

Die Erfindung betrifft eine Schaltarmaturanordnung zur Steuerung von Prozessströmen.

In der EP 1 413 810 A1 ist eine gattungsgemäße Schaltarmaturanordnung eines Turbinenventils zur Steuerung der Gas- oder Dampfzufuhr einer Turbine oder für eine Prozessarmatur zur Steuerung eines Prozessstroms in der Verfahrenstechnik offenbart. Derartige Schaltarmaturanordnungen haben üblicherweise einen Stellantrieb, der beim Gegenstand der EP 1 413 810 A1 als elektrischer Spindelantrieb ausgeführt ist. Bei einer Gasturbine lässt sich beispielsweise mittels einer derartigen Stellanordnung ein Öffnungsquerschnitt einer Armatur zur Einstellung einer Gaszufuhr verstellen. In einem Notfall, beispielsweise bei einem Stromausfall oder einer Störung, soll die Armatur selbsttätig zurückgestellt werden, um eine Beschädigung der Anlage zu vermeiden. Dazu ist bei der bekannten Lösung dem Spindeltrieb ein Kniehebelmechanismus zugeordnet, der im regulären Betrieb, d.h. bei hinreichender Stromversorgung in einer Strecklage arretiert ist, in der eine Vorspannfeder gespannt ist. Bei einem Stromausfall gibt der Verriegelungsmechanismus den Kniehebel frei, so dass er über die Vorspannfeder aus seiner Streckstellung in seine Knickstellung verstellt wird und entsprechend dieses Verstellweges die Armatur in die vorbestimmte Grundposition, in der Regel die Schließposition, zurückverstellt wird.

In der DE 10 2009 021 668 A1 der Anmelderin ist eine Anordnung offenbart, bei der eine Armatur über einen Regelantrieb und eine in Reihe dazu angeordnete Schaltarmatur über einen Schaltantrieb betätigt werden. Der Regelantrieb ist mit einer Notfallbetätigung ausgeführt, die die Armatur bei einem Stromausfall schließt. Im Unterschied zum vorbeschriebenen Ausführungsbeispiel ist diese Notfallbetätigung nicht durch einen Kniehebelmechanismus sondern durch eine Feder ausgeführt, die in Schließrichtung auf die Armatur wirkt und die hydraulisch vorgespannt ist. Bei der Notfallbetätigung wird dieser Vorspanndruck zum Niederdruck hin abgebaut, so dass die Feder die Regelarmatur zusteuert. In entsprechender Weise wird auch die Schaltarmatur bei einem Stromausfall geschlossen, so dass eine Beschädigung der Turbine oder verfahrenstechnischen Anlage nahezu ausgeschlossen ist. Bei dieser bekannten Lösung ist in einem Entlastungspfad zum Niederdruck ein elektrisch betätigbares Armaturventil angeordnet, das in Richtung seiner Öffnungsstellung über eine Feder vorgespannt ist und elektrisch in eine Stellung umschaltbar ist, in der der Entlastungspfad abgesperrt ist. Bei einem Stromausfall wird dann entsprechend dieser Entlastungspfad geöffnet, so dass sich die Feder entspannen kann.

Eine wichtige Anforderung an derartige hydraulische Schaltarmaturanordnungen besteht darin, dass die Notfunktionsfähigkeit der Stellanordnung während des Betriebs, weitgehend ohne Beeinträchtigung überprüft werden kann. Dabei soll festgestellt werden, ob die Notfallbetätigung intakt ist und bei einem Stromausfall die Prozessarmatur und/ oder den Schaltantrieb schließen kann.

Bei dem Regelantrieb ist diese Prüfung mit einem vergleichsweise geringen Aufwand möglich, da durch geeignete Ansteuerung des Regelantriebs die Notfunktionsfähigkeit im Sinne einer Teilhubprüfung abgefragt werden kann. Eine derartige Teilhubprüfung ist mit einer herkömmlichen Schaltarmatur jedoch nicht realisierbar, da diese über den zugeordneten Schaltantrieb lediglich zwischen der Öffnungsstellung und der Schließstellung umschaltbar ist. Die Überprüfung kann demzufolge nicht während des Betriebs der Turbine oder verfahrenstechnischen Anlage erfolgen.

In der nachveröffentlichten DE 10 2011 **(AZ kommt von Hrn Wiesmann)** ist eine hydraulische Schaltarmaturanordnung gezeigt, bei der eine in Richtung einer Schließposition vorgespannte Armatur über einen Aktor betätigt wird. Der Aktor, vorzugsweise ein Hydraulikzylinder, hat einen in Öffnungsrichtung wirksamen Druckraum, der über drei parallele Entlastungspfade mit Niederdruck verbindbar ist. Erfindungsgemäß ist ein Nebenentlastungspfad vorgesehen, der im Prüfbetrieb aufgesteuert werden kann.

Mit einer derartigen Lösung lässt sich die Notfunktion des Schaltantriebs einer Schaltarmatur zuverlässig auf dem Wege einer Teilhubprüfung überprüfen. Problematisch ist es jedoch, wenn zwei Schaltantriebe parallel oder in Reihe geschaltet sind, da dann bei der Überprüfung der Notfunktion beide Schaltantriebe, beispielsweise über den vorbeschriebenen Nebenentlastungspfad, drucklos geschaltet werden und somit beide einen Teilhub durchführen. Dadurch ist es schwierig zu beurteilen, ob die Notfunktion jedes einzelnen Schaltantriebs gewährleistet ist.

Demgegenüber liegt der Erfindung die Aufgabe zugrunde, eine Schaltarmaturanordnung zu schaffen, bei der die Notfunktion zweier Schaltantriebe überprüfbar ist.

Diese Aufgabe wird durch eine Schaltarmaturanordnung mit den Merkmalen des Patentanspruches 1 gelöst.

Vorteilhafte Weiterbildungen der Erfindung sind Gegenstand der Unteransprüche.

Erfindungsgemäß hat die Schaltarmaturanordnung zur Steuerung von Prozessströmen (Gas, Flüssigkeit) zumindest zwei Schaltarmaturen, die jeweils mittels eines Aktors betätigbar sind. Dieser Aktor ist mittels eines Energiespeichers in Richtung einer Grundstellung vorgespannt, in der die zugeordnete Schaltarmatur geschlossen ist. Der Aktor ist hydraulisch mit einem Druck beaufschlagbar, um die Schaltarmatur gegen die Kraft des Energiespeichers zu öffnen. Erfindungsgemäß ist einer der beiden Schaltarmaturen ein zusätzlicher Energiespeicher zugeordnet, der nur während eines Teiles des Hubs des betreffenden Aktors in Richtung der Stellung in Wirkeingriff mit dem Aktor steht. Nach Durchführung dieses Teilhubs wirkt dann nur noch der herkömmliche Energiespeicher in Richtung der Grundstellung, vorzugsweise der Schließstellung der Schaltarmatur. Wird nun der entgegen der Kraft der Energiespeicher wirksame Druckraum der Aktoren mit dem Niederdruck verbunden, stellt sich im Druckraum des mit dem zusätzlichen Energiespeicher verbundenen Aktors ein Druck ein, der dem Kraftäquivalent des Energiespeichers und des zusätzlichen Energiespeichers entspricht. Dieser Druck überwiegt die Rückstellkraft des Energiespeichers am anderen Aktor, der ohne den zusätzlichen Energiespeicher ausgeführt ist. Dementsprechend bleibt dieser Aktor zunächst stehen, während sich der mit dem zusätzlichen Energiespeicher versehene Aktor in Richtung der federvorgespannten Grundstellung bewegt. Nach Durchfahren des Teilhubs gelangt der zusätzliche Energiespeicher außer Eingriff. Bei diesem Teilhub ist der zugeordnete Energiespeicher jedoch schon etwas entladen, so dass die Rückstellkraft des noch vollständig geladenen Energiespeichers des ohne zusätzlichen Energiespeicher ausgeführten Aktors überwiegt und entsprechend dieser in Richtung seiner Grundposition verfahren wird, während der andere Aktor stehenbleibt.

Auf diese Weise ist sichergestellt, dass beide Aktoren eine bestimmte vorgegebene Strecke ausfahren, wenn die Teilhubprüfung vorgenommen wird. D.h. die Notfunktion der einzelnen Schaltantriebe lässt sich auch bei einem gemeinsamen Nebenentlastungspfad zuverlässig feststellen.

Bei einem bevorzugten Ausführungsbeispiel der Erfindung sind die Aktoren als Schaltzylinder ausgeführt, während die Energiespeicher Schaltfedern sind, die den Schaltzylinder in Ausfahrrichtung beaufschlagen.

Der zusätzliche Energiespeicher kann als Teilhubfeder ausgeführt sein, die nach dem Teilhub auf einen Anschlag aufläuft, so dass der weitere Hub des Aktors durch die zugeordnete Schaltfeder bestimmt ist, während der Teilhub durch die Kraft der Schaltfeder und der Teilhubfeder bestimmt ist.

Bei einer besonders bevorzugten Variante sind die Schaltfeder und die Teilhubfeder parallel zu einander angeordnet.

Die Überprüfung der Notfunktion ist besonders einfach, wenn die Schaltfeder beider Schaltarmaturen in etwa die gleiche Federrate und die gleiche Vorspannung haben.

Erfindungsgemäß wird es bevorzugt, wenn der Teilhub vom inneren Totpunkt des Zylinders ausgeht (eingefahrener Zylinder).

Bei einem Ausführungsbeispiel der Erfindung ist die Schaltarmaturanordnung mit mehreren, vorzugsweise drei parallelen Entlastungspfaden ausgebildet, in denen jeweils ein stromaufwärtiges und ein stromabwärtiges Entlastungsventil hintereinander geschaltet sind. Diese lassen sich zum Schließen der Schaltarmaturen jeweils aus einer Sperrstellung in eine Entlastungsstellung verstellen.

Die Notfunktion wird mittels eines Nebenentlastungspfades geprüft, der sich zwischen Ausgangsanschlüssen (B) der stromaufwärtigen oder der stromabwärtigen Entlastungsventile erstreckt, wobei jeweils zwischen zwei benachbarten Entlastungsventilen zumindest eine Blende angeordnet ist. Der Entlastungspfad hat des Weiteren eine Ansteuerschaltung, die derart ausgeführt ist, dass ein stromaufwärtiges Entlastungsventil in einem Entlastungspfad und ein stromabwärtiges Entlastungsventil in einem anderen Entlastungspfad in einem Prüfbetrieb in eine Entlastungsstellung verstellbar sind.

Der Aufbau der Schaltarmaturanordnung ist weiter vereinfacht, wenn die Entlastungsventile als vorgesteuerte Logikventile ausgeführt sind.

Erfindungsgemäß wird es bevorzugt, wenn die Federrate der Schaltfedern geringer ist als diejenige der Teilhubfeder.

Ein bevorzugtes Ausführungsbeispiel der Erfindung wird im Folgenden anhand schematischer Zeichnungen näher erläutert. Es zeigen:

Figur 1 ein stark vereinfachtes Schaltbild mit einer Regelarmatur und einer erfindungsgemäßen Schaltarmaturanordnung;

Figur 2 einen Schaltplan zur Verdeutlichung der Ansteuerung einer Schaltarmaturanordnung gemäß Figur 1 und

Figur 3 eine Prinzipdarstellung der Funktionsweise der erfindungsgemäßen Schaltarmaturanordnung.

Die Erfindung wird im Folgenden anhand eines Ausführungsbeispiels erläutert, bei dem über eine Regelarmatur und eine Schaltarmaturanordnung 1 ein Dampfvolumenstrom einer Dampfturbine eingestellt werden soll. Derartige Stellanordnungen können natürlich auch bei der Gasturbinenregelung oder bei der allgemeinen Verfahrenstechnik verwendet werden.

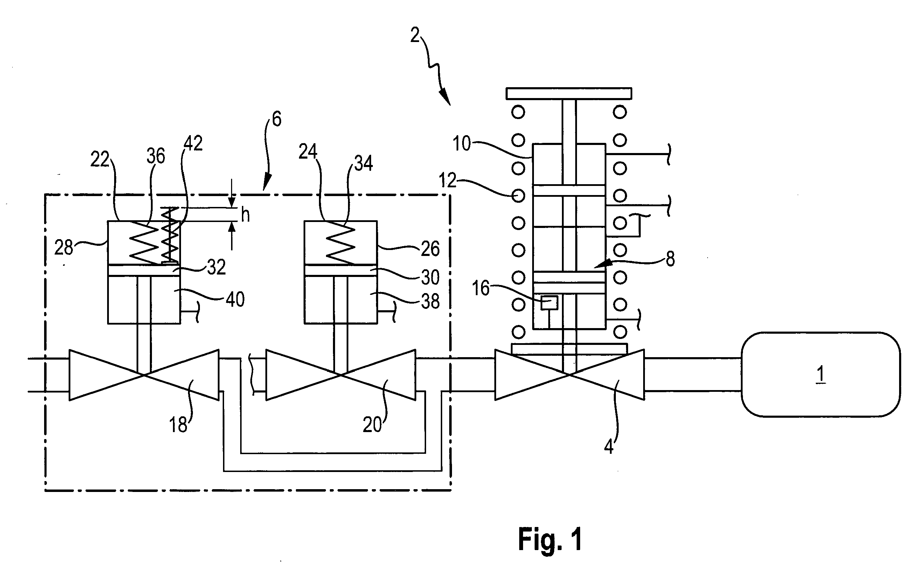

Figur 1 zeigt dabei ein stark vereinfachtes Schaltschema einer Dampfturbine 1, deren Dampfvolumenstrom über eine erfindungsgemäße Stellanordnung 2 mit einer Regelarmatur 4 und einer Schaltarmaturanordnung 6 mit zwei parallel vor der Regelarmatur angeordneten Schaltarmaturen regelbar ist. Die Betätigung der Regelarmatur 4 erfolgt über einen Regelantrieb 8, über den der Öffnungsquerschnitt der Regelarmatur 4 proportional verstellbar ist, um die Dampfzufuhr zur Dampfturbine 1 zu regeln. Der Regelantrieb 8 besteht im Wesentlichen aus einem Regelzylinder 10, über den ein Ventilkörper der Regelarmatur 4 verstellbar ist. Im Fall einer Störung, beispielsweise eines Stromausfalls, kann die Regelarmatur 4 über den Regelzylinder 10 nicht direkt zurückgestellt werden. Beim erfindungsgemäßen Stellantrieb erfolgt diese Rückstellung über eine Notfallbetätigung 12, die im Wesentlichen aus einem Federspeicher besteht, der hydraulisch über den Regelzylinder 10 vorgespannt ist. Bei einem Stromausfall wird der Federspeicher der Notfallbetätigung 12 entriegelt, so dass die Regelarmatur 4 in ihre Schließstellung zurückgefahren wird. Um eine übermäßige Beschleunigung der Regelarmatur 4 in der Endlage zu vermeiden, ist dieser eine Dämpfungseinrichtung 16 zugeordnet, über die die Bewegung der Armatur im Bereich der Endlage gedämpft wird.

Hinsichtlich weiterer Einzelheiten des Aufbaus derartiger Regelarmaturen wird auf die eingangs genannten Druckschriften verwiesen.

Die erfindungsgemäße Schaltarmaturanordnung 6 hat zwei parallel angeordnete Schaltarmaturen 18, 20, denen jeweils ein Schaltantrieb 22, 24 zugeordnet ist. Beide Schaltantriebe 22, 24 werden im regulären Betrieb der Dampfturbine in ihrer Öffnungsstellung gehalten. Bei einem Stromausfall werden die Schaltarmaturen 18, 20 über den jeweils zugeordneten Schaltantrieb 22, 24 in die Schließstellung verfahren, so dass die Dampfzufuhr abgesperrt ist. Beim dargestellten Ausführungsbeispiel besteht jeder Schaltantrieb 22, 24 im Prinzip aus einem Schaltzylinder 26, 28, dessen Kolben 30, 32 jeweils über eine Schaltfeder 34, 36 in Ausfahrstellung vorgespannt ist, in der die zugeordnete Schaltarmatur 18, 20 abgesperrt ist. Ein kolbenstangenseitiger Ringraum 38, 40 lässt sich jeweils über eine Druckmittelzufuhr mit einem Druck beaufschlagen, der hinreichend ist, um den Kolben 30, 32 gegen die Kraft der jeweiligen Schaltfeder 34, 36 einzufahren - die Schaltarmatur 18, 20 ist dann geöffnet. Selbstverständlich kann der Kolben 30, 32 auch elektrisch betätigt sein.

Im Falle einer Störung, beispielsweise eines Stromausfalls wird der Ringraum 38, 40 mit Niederdruck verbunden, so dass die zugehörige Schaltarmatur 18, 20 durch die Kraft der Schaltfeder 34, 36 in ihre Sperrposition verstellt wird.

Erfindungsgemäß ist der Schaltantrieb 22 der Schaltarmatur 20, 18 zusätzlich mit einer Teilhubfeder 42 ausgeführt, die parallel zur Schaltfeder 36 angeordnet ist und den Kolben 32 in Richtung seiner Schließposition beaufschlagt. Diese Teilhubfeder 42 ist jedoch nur während eines Teilhubs h ausgehend vom oberen Totpunkt (Schaltfeder 36 und Teilhubfeder 42 vollständig gespannt) wirksam. Wie im Folgenden erläutert, läuft die Teilhubfeder 42 nach Durchfahren des Teilhubs h auf einen Anschlag auf, so dass die weitere Schließbewegung des Kolbens 32 durch die Kraft der Schaltfeder 36 und den Druck im Ringraum 40 bestimmt ist.

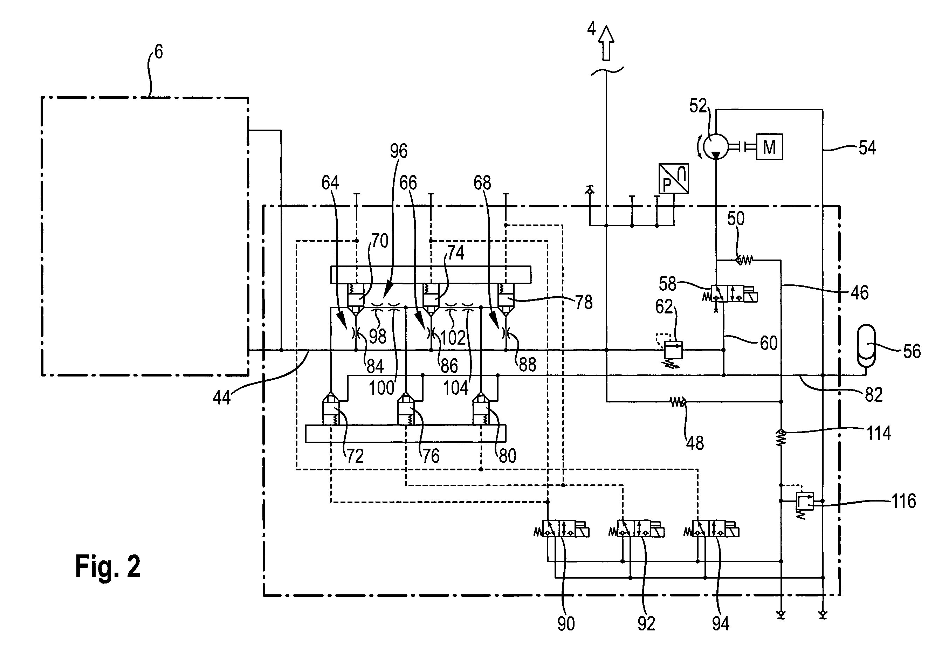

Figur 2 zeigt einen Schaltplan, aus dem die Ansteuerung der beiden Schaltantriebe 22, 24 der Schaltarmaturanordnung 6 entnehmbar ist. Der prinzipielle Aufbau dieser Schaltung ist in dem eingangs beschriebenen Stand der Technik erläutert, so dass hier nur die grundsätzliche Funktion erklärt wird. Bei der dargestellten Lösung ist beiden Schaltantrieben 22, 24 der Schaltarmaturanordnung 6 eine gemeinsame Schaltung zugeordnet, über die die beiden Ringräume 38, 40 mit einem Druck beaufschlagbar sind, um die Schaltarmaturen 18, 20 in ihre Öffnungsstellung zu bringen. Bei Entlastung des Drucks in den Ringräumen 38, 40 werden die anhand Figur 1 erläuterten Federn 34, 36, 42 wirksam, so dass die Schaltarmaturen 18, 20 in ihre Schließposition verfahren werden. Beide Ringräume 38, 40 sind an eine Hauptleitung 44 angeschlossen, die ihrerseits in einer Versorgungsleitung 46 mündet, wobei in der Hauptleitung 44 ein Rückschlagventil 48 vorgesehen ist, das eine Druckmittelströmung in Richtung zur Schaltarmaturanordnung 6 zulässt und eine Druckmittelströmung in Richtung zur Versorgungsleitung 46 sperrt. Letztere ist über ein weiteres Rückschlagventil 48 an den Druckanschluss einer Schaltpumpe 52 angeschlossen, deren Sauganschluss über eine Saugleitung 54 an einen Niederdruckspeicher 56 angeschlossen ist. Die Versorgungsleitung 46 verzweigt hin zum Anschluss A eines Niederdruckventils 58, das in seiner federvorgespannten Grundposition den Arbeitsanschluss A mit einem Tankanschluss T verbindet, der seinerseits an eine Tankleitung 60 angeschlossen ist, die in der Saugleitung 54 mündet. Der Druck in der Versorgungsleitung 44 wird über ein Druckbegrenzungsventil 62 begrenzt.

Das Niederdruckventil 58 lässt sich in eine Schaltposition verstellen, in der die Druckmittelverbindung zur Tankleitung 60 abgesperrt ist. Beim dargestellten Ausführungsbeispiel ist das Niederdruckventil als Sitzventil ausgeführt.

Die beiden Ringräume 38, 40 können über insgesamt drei Entlastungspfade 64, 66, 68 mit dem Niederdruckspeicher 56 verbunden werden, um die Schaltarmaturen 18, 20 zu schließen. In jedem der Entlastungspfade 64, 66, 68 sind zwei in Reihe geschaltete Entlastungsventile 70, 72; 74, 76; 78, 80 angeordnet, über die eine Druckmittelverbindung von der Hauptleitung 44 zu einer mit dem Niederdruckspeicher 56 verbundenen Ablaufleitung 82 aufsteuerbar ist. Letztere mündet in die Saugleitung 54 ein. Jedes der Entlastungsventile 70, 72, 74, 76, 78, 80 ist als Logikventil ausgeführt. Die drei Entlastungsventile 70, 74, 78 sind mit ihren Anschlüssen A über jeweils eine Blende 84, 86, 88 mit der Hauptleitung 44 verbunden. Radiale Anschlüsse B der Entlastungsventile 70, 74, 78 sind mit den Anschlüssen A der Entlastungsventile 72, 76, 80 verbunden. Deren radiale Anschlüsse B sind dann ihrerseits an die Ablaufleitung 82 angeschlossen. Die Entlastungsventile 70 bis 80 sind über eine vergleichsweise schwache Feder in Richtung ihrer Schließposition vorgespannt. In Steuerräumen der Entlastungsventile wirkt ein Druck, der über jeweils einem Entlastungspfad 64, 66, 68 zugeordnete Entlastungssteuerventile 90, 92, 94 bestimmt ist. Diese sind jeweils als 3/2-Wegesitzventile ausgeführt und über eine Feder in eine Grundposition vorgespannt, in der jeweils ein Steueranschluss A mit einem Tankanschluss T verbunden ist, der seinerseits in Druckmittelverbindung mit dem Niederdruckspeicher 56 steht. Jedes der Entlastungsventile 90, 92, 94 kann elektrisch in eine Position geschaltet werden, in der der Anschluss A mit einem Druckanschluss P verbunden ist, der seinerseits mit der Versorgungsleitung 46 und somit mit dem Druckanschluss der Schaltpumpe 52 in Druckmittelverbindung steht. Der Steueranschluss A des Entlastungssteuerventils 90 ist über Steuerleitungen mit den Steuerräumen der Entlastungsventile 72 und 74 verbunden. Der Steueranschluss A des Entlastungssteuerventils 92 ist über Steuerleitungen mit den Steuerräumen der Entlastungsventile 76 und 78 verbunden. Der Steueranschluss des dritten Entlastungssteuerventils 94 ist dann entsprechend mit den Steuerräumen der Entlastungsventile 70 und 80 verbunden. Mit anderen Worten gesagt, über jeweils ein Entlastungssteuerventil 90, 92, 94 werden in unterschiedlichen Entlastungspfaden gelegene Entlastungsventile mit Nieder- oder Hochdruck (Pumpendruck) beaufschlagt. Auf diese Weise wird eine hydraulische "2-aus-3-Schaltung" ausgebildet, durch die sichergestellt ist, dass auch bei Ausfall eines der Entlastungssteuerventile 90, 92, 94 oder der zugeordneten Entlastungsventile 70 bis 80 ein ordnungsgemäßes Schließen gewährleistet ist.

Bei einem Stromausfall werden die Entlastungssteuerventile 90, 92, 94 durch die Kraft ihrer jeweiligen Schaltfeder in ihre Grundposition verstellt, in der der jeweilige Entlastungsströmungspfad in Richtung zum Niederdruckspeicher 56 aufgesteuert ist, so dass das Druckmittel aus den beiden Ringräumen 38, 40 über die drei vorbeschriebenen Entlastungspfade 64, 66, 68 abströmt, so dass die Schaltarmatur durch die Kraft der Federn 34, 36, 42 in ihre Sperrstellung umgeschaltet werden.

Die Funktionsfähigkeit der erfindungsgemäßen Schaltarmaturanordnung 6 soll über eine Teilhubprüfung überprüft werden können .

Um eine derartige Teilhubprüfung zu ermöglichen, sind die Ausgangsanschlüsse B der stromaufwärtig (in Druckentlastungsrichtung gesehen) angeordneten Entlastungsventile 70, 74, 78 über einen Nebenentlastungspfad 96 mit einander verbunden, wobei jeweils zwischen zwei benachbarten Entlastungsventilen 70, 74, 78 zwei in Reihe geschaltete Düsen 98, 100 bzw. 102, 104 angeordnet sind. Diese Düsen haben einen vergleichsweise geringen Öffnungsquerschnitt. Dieser ist jedoch groß genug, dass eine Verstopfung der Düsen durch im Druckmittel enthaltene Verunreinigungen verhindert werden kann. Auf der anderen Seite ist der Druckverlust über die beiden hintereinander geschalteten Düsen 98, 100; 102, 104 so groß, dass nur wenig Druckmittel abströmen kann. Optional können auch Stromregelventile statt der Düsen zum Einsatz kommen.

In der Versorgungsleitung 46 ist ein Rückschlagventil 114 angeordnet, das bei Schaltvorgängen einen Druckeinbruch vor den Entlastungsventilen 90, 92, 94 über das Rückschlagventil 48 verhindert.

Mit dem Bezugszeichen 116 ist ein Druckbegrenzungsventil gekennzeichnet, das bei einer Temperaturerhöhung einen Druckanstieg in der Entlastungsleitung 46 verhindert, indem es zur Saugleitung 54 öffnet.

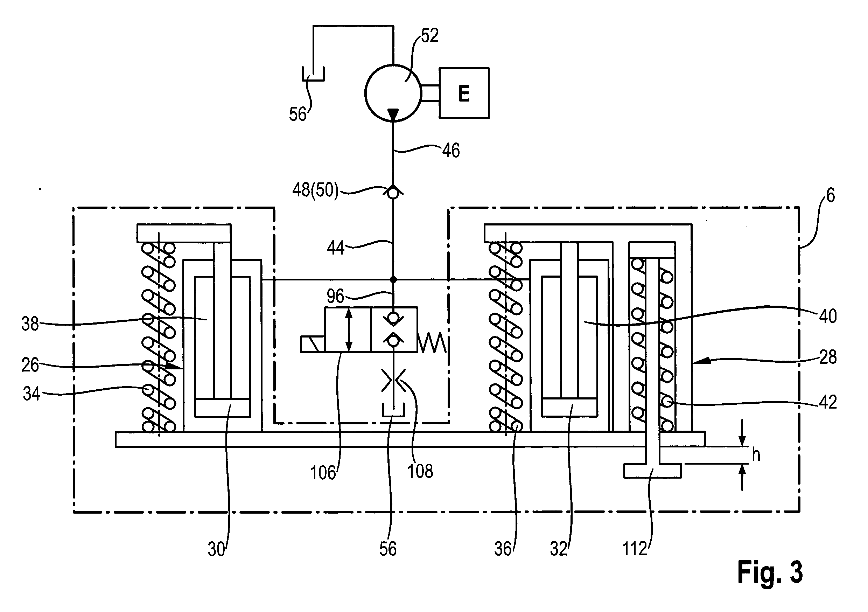

Zur Teilhubprüfung wird eines der Entlastungssteuerventile 90, 92, 94 in seine Grundposition umgeschaltet, in der der jeweilige Anschluss A mit dem Tankanschluss T verbunden ist. Wird beispielsweise das Entlastungssteuerventil 90 in seine in Figur 2 dargestellte Grundposition gebracht und die beiden anderen Entlastungssteuerventile 92, 94 durch Bestromen der Schaltmagnete in ihre Schaltposition umgeschaltet, so werden die Steuerräume der beiden Entlastungsventile 72, 74 zum Niederdruckspeicher 56 hin entlastet, während die anderen Entlastungsventile 70, 76, 78, 80 in ihrer Sperrstellung verbleiben. Durch dieses Umschalten werden, wie im Folgenden noch anhand Figur 3 näher erläutert, die beiden Ringräume 38, 40 über die Hauptleitung 44, die Blende 86, das aufgesteuerte Entlastungsventil 74, die beiden Düsen 98, 100 des Nebenentlastungspfades 96 und über das ebenfalls aufgesteuerte stromabwärtige Entlastungsventil 72 und die Ablaufleitung 82 mit dem Niederdruckspeicher 56 verbunden.

Weitere Einzelheiten werden anhand Figur 3 erläutert. In dieser Darstellung ist der Schaltantrieb und die zugeordnete hydraulische Schaltung zur Betätigung der Schaltarmaturanordnung 6 äußerst stark vereinfacht wiedergegeben, wobei die eigentlichen Schaltarmaturen 18, 20 nicht dargestellt sind. In Figur 3 dargestellt ist die vorbeschriebene Schaltpumpe 52, die das Druckmittel aus einem Niederdruckspeicher 56 oder einem Tank ansaugt. Der Druckanschluss ist, wie erläutert, über die Versorgungsleitung 46 und das Rückschlagventil 48 bzw. 50 mit der Hauptleitung 44 verbunden, die sich verzweigt und in den Ringräumen der Schaltzylinder 26, 28 mündet. Die Funktion der Entlastungspfade und der darin angeordneten Entlastungsventile sowie des Nebenentlastungspfades 96 mit den zugehörigen Düsen ist durch ein Ventil und eine Düse wiedergegeben, die im Folgenden als Ventil 106 und Drossel 108 bezeichnet werden. In seiner federvorgespannten Grundposition entsprechend der Grundposition der vorbeschriebenen Entlastungsventile 70 bis 80 ist die Druckmittelverbindung zum Tank oder Niederdruckspeicher 56 leckagefrei abgesperrt. Das Aufsteuern des Entlastungspfades bzw. des Nebenentlastungspfades 96 erfolgt durch Umschalten des Ventils 106, so dass die Druckmittelverbindung der beiden Ringräume 38, 40 zum Niederdruckspeicher 56 (Tank) aufgesteuert wird, wobei die Drossel 108 den Druckmittelvolumenstrom begrenzt.

Wie in Figur 3 angedeutet, wird der Kolben 30 des Schaltzylinders 26 lediglich über die Schaltfeder 34 in Richtung seiner Ausfahrposition (zugeordnete Schaltarmatur 18 gesperrt) beaufschlagt. Durch Druckmittelverbindung des Ringraumes 38 mit dem Druckanschluss der Schaltpumpe 52 wird der Kolben 30 gegen die Kraft der Schaltfeder 34 in seine dargestellte Position eingefahren - die zugeordnete Schaltarmatur 20 ist dann geöffnet. Der Schaltzylinder 28 der anderen Schaltarmatur 18 ist, wie bereits erläutert, ebenfalls mit einer Schaltfeder 36 ausgeführt, deren Federrate beispielsweise derjenigen der Schaltfeder 34 entspricht. Parallel zu dieser Schaltfeder 36 ist der Kolben 32 in Richtung seiner Ausfahrposition durch die Kraft der Teilhubfeder 42 beaufschlagt. Diese Teilhubfeder 42 ist jedoch nur während eines Teilhubs h ausgehend von dem dargestellten inneren Totpunkt aus wirksam. Nach Durchfahren dieses Teilhubs h wird ein Anschlag 112 wirksam, der ein weiteres Entspannen der Teilhubfeder 42 und somit deren Wirkeingriff mit dem Kolben 32 verhindert. D.h. nach Durchfahren des Teilhubs h wird die Ausfahrbewegung des Kolbens 32 nur noch im Wesentlichen durch die Kraft der Schaltfeder 36 und dem entsprechenden Druck im Ringraum 40 beeinflusst.

Wie eingangs erläutert, wird beim Umschalten des Ventils 106 (entsprechend Aufsteuern des Nebenentlastungspfades gemäß Figur 2) sowohl der Ringraum 40 als auch der Ringraum 38 über die Drossel 108 mit dem Tank oder Niederdruckspeicher 56 verbunden. Der Druck in den Ringräumen 38, 40 entspricht dann zunächst dem Kraftäquivalent der Schaltfeder 36 und der zusätzlichen Teilhubfeder 42. Dieser Druck überwiegt die Rückstellkraft der Schaltfeder 34 am Schaltzylinder 26, so dass dieser zunächst in seiner eingefahrenen Stellung verbleibt. Dementsprechend fährt der Kolben 32 des Schaltzylinders 28 aus, bis nach dem Durchfahren des Teilhubs h der Anschlag 112 wirksam wird. D.h. die Teilhubfeder 42 gelangt außer Eingriff. Nach Durchfahren dieses Teilhubs h ist der andere Kolben 30 des Schaltzylinders 26 immer noch in seiner Einfahrposition. Die Kraft der dementsprechend noch vollständig gespannten Schaltfeder 34 überwiegt dann die Kraft der schon etwas entspannten Schaltfeder 36 des anderen Schaltzylinders 28, so dass dessen Kolben 32 stehenbleibt und der Kolben 30 des Schaltzylinders 26 ausfährt, wobei der Druck auf den Äquivalenzwert absinkt, der in etwa der Kraft der Schaltfeder 34 entspricht.

Dementsprechend erfolgt die Ausfahrbewegung der beiden Kolben 30, 32 der Schaltzylinder 26, 28 sequentiell, so dass auf einfache Weise ein Teilhubprüfung durchgeführt werden kann. Sobald die Vorspannung der Schaltfeder 34 auf den Wert abgesunken ist, den die bereits entspannte Schaltfeder 36 hat, bewegen sich beide Schaltzylinder 26, 28 synchron - die Teilhubprüfung ist beendet.

Die Funktion sei nochmals anhand eines konkreten Rechenbeispiels erläutert. Es sei angenommen, dass die Federkraft der Schaltfeder 34 bei vollständig eingefahrenem Kolben 30 etwa 36.300 N beträgt. Die Federrate der Schaltfeder 34 soll 50 N/mm betragen. Die innere Reibung des Schaltzylinders 26 wird mit 1100 N angenommen.

Die Federkraft der Schaltfeder 36 des Schaltzylinders 28 soll bei eingefahrenem Zylinder 36.100 N betragen. Die Federrate dieser Schaltfeder 36 beträgt ebenfalls 50 N/mm. Die innere Reibung wird mit 850 N angenommen.

Die Federkraft der Teilhubfeder 42 wird bei vollständig eingefahrenem Kolben 32 mit 3200 N angenommen. Die Federrate dieser Teilhubfeder 42 soll 320 N/mm betragen. Der Hub h der Feder beträgt 5 mm.

Die Kräftebilanz beim Aufsteuern des Ventils 106 (Hub = 0,00 mm) ist dann wie folgt: Auf den Kolben 30 des Schaltzylinders 26 wirkt die volle Federkraft abzüglich der inneren Reibung des Zylinders, d.h. es wirkt eine Kraft von 35.200 N. Auf den anderen Schaltzylinder 28 wirkt die Federkraft der Schaltfeder 36 zuzüglich der Kraft der Teilhubfeder 42 abzüglich der inneren Reibung, d.h. es wirkt eine Kraft von 38.450 N. Dementsprechend bewegt sich zunächst der Kolben 32 des Schaltzylinders, der Kolben 30 bleibt stehen.

Nach einem Hub von beispielsweise 5 mm sieht die Kräftebilanz etwa wie folgt aus: Am Schaltzylinder 30 wirkt immer noch die gleiche Kraft von 35.200 N, da der Kolben 30 sich nicht bewegt hat. Am Schaltzylinder 28 wirkt eine Kraft, die sich gegenüber der Ausgangssituation um die Entspannung der beiden Federn 36, 42 verringert hat, dementsprechend berechnet sich die Federkraft nach 36.100 N - 5 mm x 50 N/mm + 3.200 N - 5 mm x 320 N/mm - 850 N = 36.600 N. D.h. nach 5 mm überwiegt immer noch die auf den Kolben 32 wirksame Kraft, so dass dieser sich weiter bewegt, während der Kolben 30 stehenbleibt.

Nach einem Hub von 5,01 mm, d.h. nach Durchfahren des Teilhubs h entfällt die über die Teilhubfeder 42 aufgebrachte Kraft, so dass sich die auf den Kolben 32 des Schaltzylinders 28 wirksame Federkraft berechnet nach der Gleichung:

$$36100 \text{ N} - 5{,}01 \text{ mm} \times 50 \text{ N/mm} - 850 \text{ N} = 35.000 \text{ N}$$

Dementsprechend bewegt sich dann der Kolben 30 des Schaltzylinders 26, während der Kolben 30 des Schaltzylinders 28 stehenbleibt.

Nach einem Hub von 4 mm des Kolbens 30 wirken auf beide Kolben 30, 32 die gleichen Federkräfte, so dass beide Kolben 30, 32 synchron ausfahren, wobei der Schaltzylinder 28 einen Vorsprung von 1 mm aufweist.

Durch die erfindungsgemäße Schaltarmaturanordnung mit zwei Schaltantrieben wird eine Teilhubprüfung durch Festlegung der Schaltreihenfolge durch nur eine 2- von 3-Auslösung ermöglicht. Dabei können zwei Schaltantriebe jeweils einem Schaltventil oder jede Schaltarmatur mit einem Schaltantrieb ausgeführt sein.

Offenbart ist eine Schaltarmaturanordnung mit zwei Schaltarmaturen, die jeweils von einem Schaltantrieb betätigt werden. Ein Schaltantrieb ist mit einem zusätzlichen Energiespeicher, beispielsweise einer Teilhubfeder ausgeführt, der eine Teilhubprüfung ermöglicht.

<u>Bezugszeichenliste:</u>

| | |
|---|---|
| 1 | Dampfturbine |
| 2 | Stellanordnung |
| 4 | Regelarmatur |

(fortgesetzt)

| | |
|---|---|
| 6 | Schaltarmaturanordnung |
| 8 | Regelantrieb |
| 10 | Regelzylinder |
| 12 | Notfallbetätigung |
| 16 | Dämpfungseinrichtung |
| 18 | Schaltarmatur |
| 20 | Schaltarmatur |
| 22 | Schaltantrieb |
| 24 | Schaltantrieb |
| 26 | Schaltzylinder |
| 28 | Schaltzylinder |
| 30 | Kolben |
| 32 | Kolben |
| 34 | Schaltfeder |
| 36 | Schaltfeder |
| 38 | Ringraum |
| 40 | Ringraum |
| 42 | Teilhubfeder |
| 44 | Hauptleitung |
| 46 | Versorgungsleitung |
| 48 | Rückschlagventil |
| 50 | weiteres Rückschlagventil |
| 52 | Schaltpumpe |
| 54 | Saugleitung |
| 56 | Niederdruckspeicher/Tank |
| 58 | Niederdruckventil |
| 60 | Tankleitung |
| 62 | Druckbegrenzungsventil |
| 64 | Entlastungspfad |
| 66 | Entlastungspfad |
| 68 | Entlastungspfad |
| 70 | Entlastungsventil |
| 72 | Entlastungsventil |
| 74 | Entlastungsventil |
| 76 | Entlastungsventil |
| 78 | Entlastungsventil |
| 80 | Entlastungsventil |
| 82 | Ablaufleitung |
| 84 | Blende |
| 86 | Blende |
| 88 | Blende |
| 90 | Entlastungssteuerventil |
| 92 | Entlastungssteuerventil |
| 94 | Entlastungssteuerventil |
| 96 | Nebenentlastungspfad |
| 98 | Düse |
| 100 | Düse |
| 102 | Düse |
| 104 | Düse |
| 106 | Ventil |
| 108 | Drossel |

(fortgesetzt)

| | |
|---|---|
| 112 | Anschlag |
| 114 | Rückschlagventil |
| 116 | Druckbegrenzungsventil |

**Patentansprüche**

1.  Schaltarmaturanordnung zur Steuerung von Prozessströmen (Gas, Fluid) mit zumindest zwei Schaltarmaturen (18, 20), die jeweils mittels eines Aktors betätigt sind, der über einen Energiespeicher in Richtung einer Grundstellung vorgespannt ist, in der die zugeordnete Schaltarmatur (18, 20) geschlossen ist und der hydraulisch mit einem Druck beaufschlagbar ist, um die Schaltarmatur (18, 20) gegen die Kraft des Energiespeichers zu öffnen, **dadurch gekennzeichnet, dass** einer der Schaltarmaturen (18) ein zusätzlicher Energiespeicher zugeordnet ist, der nur während eines Teilhubs (h) des Aktors in Richtung der Grundstellung in Wirkeingriff steht.

2.  Schaltarmaturanordnung nach Patentanspruch 1, wobei der Aktor ein Schaltzylinder (28) ist und der Energiespeicher eine Schaltfeder (36) ist, die den Schaltzylinder (28) in Ausfahrrichtung beaufschlagt.

3.  Schaltarmaturanordnung nach Patentanspruch 1 oder 2, wobei der zusätzliche Energiespeicher eine Teilhubfeder (42) ist, die nach dem Teilhub (h) auf einen Anschlag aufläuft, so dass der weitere Hub des Aktors im Wesentlichen durch die Schaltfeder (36) bestimmt ist, während die Ausfahrbewegung während des Teilhubs (h) durch die Kraft der Schaltfeder (36) und der Teilhubfeder (42) gemeinsam bestimmt ist.

4.  Schaltarmaturanordnung nach einem der vorhergehenden Patentansprüche, wobei die Schaltfeder (36) und die Teilhubfeder (42) parallel angeordnet sind.

5.  Schaltarmaturanordnung nach einem der vorhergehenden Patentansprüche, wobei die Schaltfedern (34, 36) beider Schaltarmaturen (18, 20) etwa die gleiche Federrate aufweisen.

6.  Schaltarmaturanordnung nach einem der vorhergehenden Patentansprüche, wobei der Teilhub (h) von einem inneren Totpunkt des Schaltzylinders (28) ausgeht.

7.  Schaltarmaturanordnung nach einem der vorhergehenden Patentansprüche, mit mehreren, vorzugsweise drei parallelen Entlastungspfaden (64, 66, 68), in denen jeweils ein stromaufwärtiges und ein stromabwärtiges Entlastungsventil (70, 72, 74, 76, 78, 80) hinter einander geschaltet ist, die zum Schließen der Schaltarmaturen (18, 20) in eine Entlastungsstellung bringbar sind.

8.  Schaltarmaturanordnung nach Patentanspruch 7, mit einem Nebenentlastungspfad (96), der sich zwischen Ausgangsanschlüssen (B) der stromaufwärtigen oder der stromabwärtigen Entlastungsventile (70, 72, 74, 76, 78, 80) erstreckt und in dem jeweils zwischen zwei benachbarten Entlastungsventilen zumindest eine Düse (98, 100, 102, 104) angeordnet ist und mit einer Ansteuerschaltung, die derart ausgeführt ist, dass ein stromaufwärtiges Entlastungsventil (70, 74, 78) in einem Entlastungspfad (64, 66, 68) und ein stromabwärtiges Entlastungsventil (72, 76, 80) in einem anderen Entlastungspfad (64, 66, 68) in einem Prüfbetrieb in eine Entlastungsstellung verstellbar sind.

9.  Schaltarmaturanordnung nach Patentanspruch 7 oder 8, wobei die Entlastungsventile (70, 72, 74, 76, 78, 80) Logikventile sind.

10.  Schaltarmaturanordnung nach einem der vorhergehenden Patentansprüche, wobei die Federraten der Schaltfedern 834, 36) geringer als diejenige der Teilhubfeder (42) sind.

Fig. 1

Fig. 2

EP 2 664 805 A2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1413810 A1
- DE 102009021668 A1

- DE 102011